# EUROPEAN PATENT SPECIFICATION

(11) **EP 0 653 045 B1**
(45) Date of publication and mention of the grant of the patent: **03.12.1997**
(21) Application number: 94912177.6
(22) Date of filing: 03.03.1994
(51) Int. Cl.: F42B 8/00, F42D 5/00, C06B 23/00

(54) **NON-DETONABLE AND NON-EXPLOSIVE EXPLOSIVE SIMULATORS**
NICHTDETONIERBARE UND NICHTEXPLOSIVE SPRENGSTOFFSIMULATOREN
SIMULATEURS D'EXPLOSIFS NON DETONANTS ET NON EXPLOSIFS

(30) Priority: 08.03.1993 US 27366
(43) Date of publication of application: 17.05.1995
(73) Proprietor: THE REGENTS OF THE UNIVERSITY OF CALIFORNIA, Oakland, California 94612-3550 (US)
(72) Inventor: SIMPSON, Randall, L., Livermore, CA 94550 (US); PRUNEDA, Cesar, O., Livermore, CA 94550 (US)
(74) Representative: Thomson, Paul Anthony
(86) International application number: PCT/US94/02288
(87) International publication number: WO 94/20815

(56) References cited:
- FR-A- 1 098 116
- US-A- 1 100 529
- US-A- 3 096 242
- US-A- 3 706 609
- US-A- 4 042 432
- US-A- 4 284 442
- US-A- 4 392 432
- US-A- 4 603 637
- US-A- 4 714 572
- US-A- 4 746 506
- US-A- 5 237 930

## Description

### BACKGROUND OF THE INVENTION

The present invention relates to the detection of explosives, particularly to methods for the detection of explosives by instruments or dogs, and more particularly to explosive simulants which are chemically equivalent but not detonable or explodable for use in training dogs, calibrating instruments, and other applications where a non-explosive simulant of an explosive is needed, and to methods for making the simulants. These materials are referred to as Non-hazardous Explosives for Security, Training and Testing (NESTT).

Various methods and apparatus have been developed for detecting explosives. As the concern of terrorist actions increases, the need to develop effective explosive detection increases. Most recently explosives detecting dogs and sensitive analytical technologies have been utilized. To enable the training of such dogs and/or the calibrating of sensitive instruments, it has been necessary to use large quantities of explosives which pose a hazard as well as preventing dog training or instrument utilization is some critical or restricted areas. For example, during the training and utilization of the dogs, quantities of explosives are carried in vehicles and placed in buildings which resulted in the possibility of explosive detonation. Whenever dogs are used to detect for illicit explosives, real explosives are in close proximity to verify that the dog is working and to reward the animal. The need for explosives thus restricts detection in populated areas such as airports. Where explosives were banned due to the location or equipment within an area, training could not be undertaken. Similarly, calibrating of sensitive analytical instruments used for the detection of explosives could only be accomplished by the presence of similar explosives, though in small quantities, but creating a hazard in and of themselves. There are many other applications that require chemical equivalence to explosives without the explosive hazard such as research and development activities in explosive destruction.and processing technologies.

Thus, there has been a need to develop safe methods of training explosives detecting dogs and/or calibrating sensitive analytical instruments, and other applications, without the use of actual explosives. The present invention satisfies that need by providing explosive simulants which are chemically equivalent to explosives in nearly all respects, but cannot chemically react violently (no detonation or explosion). In addition to the chemical equivalence, the chemical elemental composition can also be simulated for detection by instruments that do not rely on odors. Thus, the use of actual explosives for training and/or instrument calibration, or other applications, could be eliminated, thereby eliminating the hazards associated with the use of explosives, which is defined herein to mean high explosives as well as gun and rocket propellants.

An explosion is defined as a rapid energy release while detonation is energy release at supersonic velocities. Thus a non-detonable material may still be explodable. Therefore, for safe use NESTT materials are desired which are non-detonable and also non-explodable.

US-A-4 746 506 describes a non-detonable and non-explodable explosive compound comprising an explosive material (nitroglycerin) and a non-explosive material (lactose), said compound normally being used as a vasodilator drug.

### Summary of the invention

According to the present invention there is provided a non-detonable and non-explodable explosive simulant comprising:
a quantity of an explosive material; and
a quantity of a non-explosive material;
said materials being combined in proportions such that the mixture is chemically equivalent to said explosive material, but is not detonable or explodable;
wherein said explosive material is selected from TNT, RDX, HMX, PETN, TATB, NTO, nitroguadanine, urea nitrate, ammonium nitrate, ammonium perchlorate, nitrate esters, ammonium picrate, lead azide, lead styphnate, fulminates, or nitrocellulose, and wherein said non-explosive material is selected from cyanuric acid, melamine, sand or glass.

Also in accordance with the present invention there is provided a method for fabricating a non-detonable and non-explodable explosive simulant, comprising the steps of:
dissolving a quantity of an explosive material in a solvent;
adding a quantity of non-explosive material to the thus formed solution;
mixing the solution; and
removing the solvent from the solution;
additionally including the steps of providing a quantity of TNT as the explosive material, and providing a quantity of cyanuric acid as the non-explosive material in a weight percentage of 5-20 percent TNT and 80-95 percent cyanuric acid; and providing acetone as the solvent in which the TNT is dissolved.

Further in accordance with the present invention there is provided a method for forming a non-detonable and non-explodable explosive simulant, comprising the steps of:
providing a substrate of a non-explosive material; and
coating the substrate with a layer of explosive material;
wherein the substrate is formed from inert material selected from cyanuric acid, melamine, sand or glass; and
the coating is formed from material selected from TNT, RDX, HMX, PETN, TATB, NTO, nitroguadanine, urea nitrate, ammonium nitrate, ammonium perchlorate, nitrate esters, ammonium picrate, lead azide, lead styphnate, fulminates, or nitrocellulose.

### BRIEF DESCRIPTION OF THE DRAWINGS

Figures 1A and 1B illustrate the chemical formulas of the components TNT and cyanuric acid.

Figure 2 is an illustration of a process of making an explosive simulant in an embedded matrix.

Figure 3 is a graph illustrating differential scanning calorimetry results with a first explosive simulant at a scan rate of 10° C/min..

Figure 4 is a graph similar to Figure 3 of a second explosive simulant.

Figure 5A is a cross-section of an embodiment of a coated bead or fiber forming an explosive simulant.

Figure 5B is a cross section of an embodiment of explosive distributed in an inert matrix forming an explosive simulant.

Figure 6 is an illustration of a process of making an explosive simulant with explosive coated on substrate.

Figure 7A, B are the mass spectra of TNT vapor and TNT simulant vapor, respectively.

Figure 8 is an illustration of a process of making a formulated explosive and a formulated explosive simulant.

### DETAILED DESCRIPTION OF THE INVENTION

The present invention is directed to a means for training dogs to detect (sniff) explosives (including gun and rocket propellants), calibrating explosive sensitive analytical instruments, or other applications. As the potential for terrorist actions involving use of explosives increases, the need to develop safe methods of detection has become more apparent. Currently the use of dogs to detect explosives has greatly increased. To enable these dogs to become proficient, training in various locations and under various conditions becomes essential. In the past, this dog training has been carried out utilizing substantial quantities of explosives which are selectively located in various buildings, areas, etc., and transported by vehicles between training locations. Naturally, training exercises using explosives pose a hazard both to the trainer, the dog, the building or location, and the transport vehicle. Also, in some cases, restrictions on the presence of explosives in a particular building or area may prevent training in some critical areas. Explosives are also present when dogs are actively working to verify that they are detecting explosives and as a reward.

By use of the present invention in the training of explosive detecting dogs, for example, the training can be carried out safely without the hazards of explosive use, and can be carried out in those areas restricted from the presence of explosives. This is accomplished by the use of simulators which are chemically equivalent to explosives, but are not detonable or explodable. The simulators would produce the same smell or scent as the actual explosive and thus enable the dog to learn to sniff-out certain explosives. Materials which dogs can be trained to sniff-out or detect include but are not limited to: trinitrotoluene (TNT), nitrocellulose, dinitrotoluene, mononitrotoluene, RDX, PETN, HMX, TATB, NTO, nitroguadanine, urea nitrate, ammonium nitrate, nitroglycerine and other nitrate esters, ammonium perchlorate, ammonium picrate, lead azide, lead styphnate, mercury fulminate and other fulminates. With these materials, common dynamites, and formulated explosives (Comp. C-4 and Comp. B), can be simulated.

For detection techniques which rely on vapor signatures, such as the olfactory sense of dogs or chemical mass spectral techniques, adequate gas concentrations can be met by maintaining a very large surface area of the energetic material, but a small mass and volume fraction relative to the inert component. Explosiveness, burn rate, and ignition properties can be minimized by using small quantities of the energetic component and selecting the major component so that it is very non-reactive, has a high heat capacity and density, low thermal conductivity, and has a low modulus to reduce the localized deposition of energy due to mechanical loading.

A simulant can be made that can be used to mock vapor signatures as well as the chemical compositions of pure explosives. The recently developed technique of neutron backscattering can be used to analyze for nitrogen, oxygen, or other unusual elemental compositions found in explosives. Selecting a non-reactive component that is rich in nitrogen, oxygen, or another element found in an explosive, in conjunction with the energetic phase which is rich in nitrogen, oxygen, or another element, should be adequate to simulate most energetic materials for this method of detection and other non-invasive approach. An explosive simulant may involve simulation of any explosive chemical element by substituting the element in the reactive material with the same element in the inert phase. Explosives can also be simulated in terms of their elemental isotopic ratios. Isotopic ratios in a simulant can mock those found in real explosive samples. Hence, not only can an explosive simulant emulate chemical and elemental properties, it can also simulate isotope ratios.

Thus, the non-detonable and non-explodable explosive simulants of the present invention are fabricated by methods which involve formulating materials with large surface areas of explosives, but with volumes too small to sustain detonation or explosion. Two fabrication methods or techniques are set forth hereinafter. The first method uses standard slurry coating techniques to produce a material with a very high binder to explosive ratio. The binders are to be selected and treated so that they would not mask the explosives vapor. The second method involves coating inert beads, fibers, or other high surface area materials with thin layers of explosive molecules. A variety of different substrates can be used ranging from polystyrene to ceramic materials. Mass spectral analysis has been carried out to verify that certain explosives and their explosive simulants produce analogous vapor signatures. Similar mass spectral analysis can also determine isotope ratios.

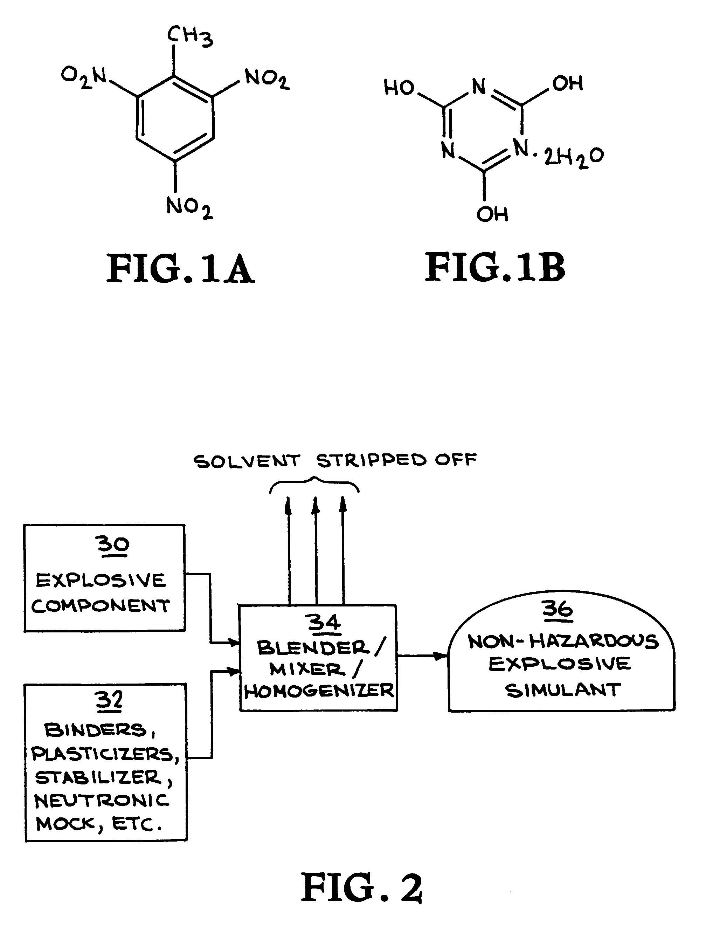

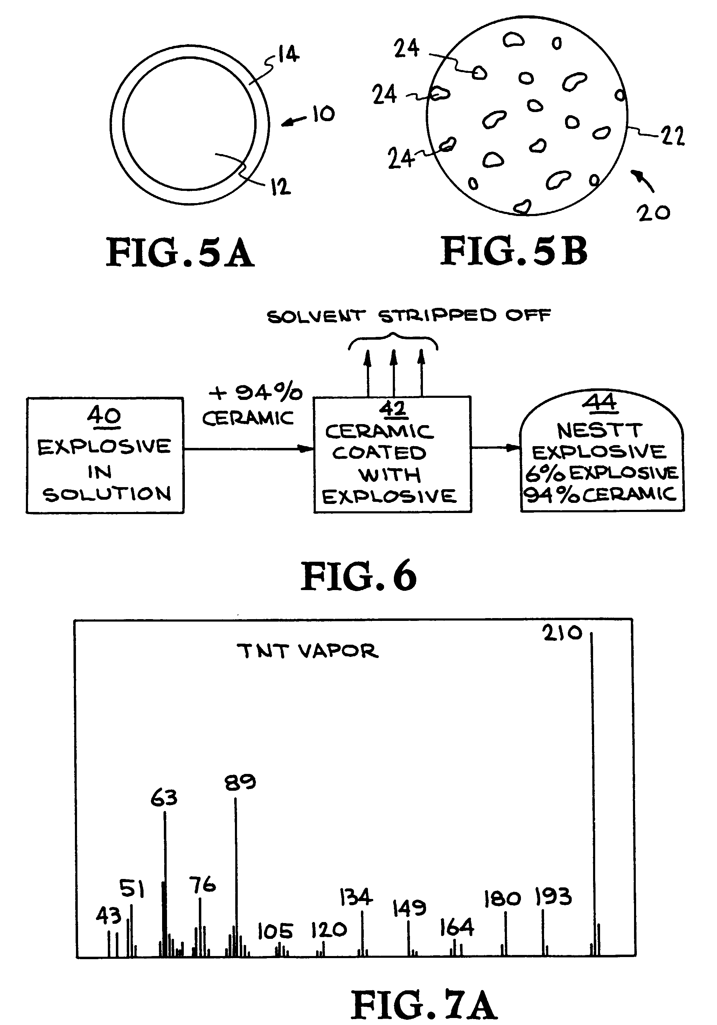

A TNT simulant has been fabricated in accordance with the present invention, with cyanuric acid as the non-reactive component. The chemical formulas of TNT and cyanuric acid, respectively, are illustrated in Figures 1A and 1B, with the following chemical characteristics of cyanuric acid being MW:165.11, m.p.:360°C, b.p.:decomposes, density: 1.768 g/cm³, solubility: water, slightly in alcohols. Formulation of two TNT/cyanuric acid simulants was carried out to verify the invention using standard slurry coating techniques, which basically involved dissolving TNT in acetone, adding cyanuric acid to the TNT/acetone solution, and while maintaining vigorous mixing, removing the solvent (acetone) by vacuum air sweep and heating to 50°C. The process is illustrated in Figure 2. Explosive 30 and inert material 32 which includes binders plasticizers, stabilizers, neutronic mock, etc. are combined in blender/mixer/homogenizer 34 to produce simulant 36. As shown in Figure 5B, explosive simulant 25 is formed of inert material matrix 22 having explosive 24 distributed substantially homogeneously therein. Typical ratios are 5-20% by weight of TNT and 80-95% by weight of cyanuric acid. The compositions of these two formulations, identified as RS-01-AA and RS-01-AB, are set forth hereinafter in Table I:

**Table I:**

| **Formulation Compositions** | | | |
|---|---|---|---|
| Simulant | Cyanuric : TNT wt. % | Cyanuric : TNT vol. % | TMD^{a} (g/cm³) |
| RS-01-AA | 80.0 : 20.0 | 78.9 : 21.1 | 1.744 |
| RS-01-AB | 90.0 : 10.0 | 89.4 : 10.6 | 1.756 |

| | | | |
|---|---|---|---|
| ^{a} TMD is theoretical maximum density. | | | |

By way of specific example, the TNT/cyanuric acid formulation was carried out as follows:
1. 150 grams of TNT was dissolved in 750 grams of solvent composed of acetone at a temperature of 25°C.
2. 1350 grams of cyanuric acid was added to the thus formed TNT/acetone solution at a temperature of 50°C.
3. The thus formed TNT/acetone/cyanuric acid mixture was submitted to vigorous mixing in a mixer operating at a medium speed setting, the mixer, for example, being a 1-gallon Baker-Perkin Vertical High Shear Mixer.
4. While maintaining the vigorous mixing, the solvent was removed by vacuum air sweep in a mixer operating at a medium speed and vacuum of less than one atmosphere, while heating the mixture to 50°C for a time period of 25 minutes, which produced 1500 grams of TNT simulant.

Small scale safety tests were performed on the formulation compositions set forth above in Table I, and the results of the safety tests are listed in Table II:

**Table II**

| **Small Scale Safety Test Results** | | | | | |
|---|---|---|---|---|---|
| Simulant | Impact^{a} (cm) | Friction^{b}(kg) | Spark^{c} | CRT^{d} (cm³/g) | DSC^{e} (°C) |
| RS-01-AA | off-scale | off-scale | no rxn | 0.016 | 250 |
| RS-01-AB | off-scale | off-scale | no rxn | 0.044 | 250 |

| | | | | | |
|---|---|---|---|---|---|
| a 2.5 kg Type 12 tool with 35 mg pressed samples. | | | | | |
| b Julius-Peters-Berlin 21 friction machine. One reaction in ten tries. | | | | | |
| c Ten tries at 1J with 510 Ω in line resistance. | | | | | |
| d Chemical Reactivity Test. 22 h at 120°C under 1atm He. | | | | | |
| e Differential Scanning Calorimery. Onset of exotherm. | | | | | |

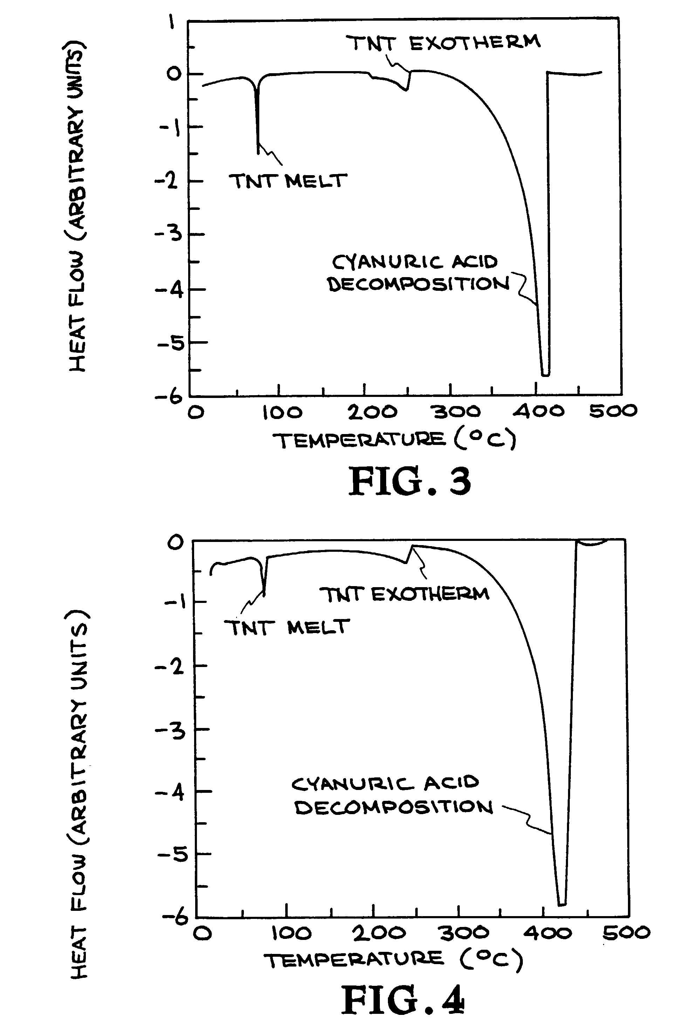

The thermal stability results of the two simulant formulations RS-01-AA (20% TNT) and RS-01-AB (10% TNT) as determined by differential scanning calorimetry, are respectively shown in Figures 3 and 4. The TNT solid-to-liquid phase transition can be identified at 80°C. At 250°C there is a small exotherm due to TNT decomposition. The large endotherm beginning at 300°C is attributed to the decomposition of cyanuric acid.

To examine sensitivity to shock, two plate dent experiments were performed. Parts that were 12.7 mm long and 12.7 mm in diameter were pressed with each of the two simulant formulations. Pressures of 200 MPa without vacuum and at ambient temperature yielded samples having densities of 92.5% TMD and 90.5% TMD with material formulations RS-01-AA and RS-01-AB, respectively. Initiation (detonation) was attempted with each material using RP-87 detonators. No deformations to mild steel plates adjacent to the simulants were produced by either material. Analysis of the recovered fractured simulant parts showed no visible evidence of reaction (detonation).

Flammability tests to ascertain the burn properties of the TNT simulants, tests for the possibility of chemical incompatibilities between TNT and the cyanuric acid, and tests relative to the TNT of the simulant decomposing over a period of time, have been completed successfully. Both the TNT simulant formulations RS-01-AA and RS-01-AB, described above, which have been scaled to 1500g, have met or exceeded expectations in regard to processing and small scale sensitivity tests.

Explosive simulants in accordance with the invention can also be produced by coating inert beads, or other substrates composed of inert material such as cyanuric acid, melamine, glass, ceramics, etc., with explosive molecules, such as TNT, RDX or nitrocellulose or any of the other previously listed explosives. Similarly, coatings may be made on other substrates including fibers, foams, and like structures to produce materials having a large ratio of explosive surface area to the volume of inert material. The explosive simulant 10, as shown in Figure 5A is formed of an inert core 12, e.g. bead or fiber, with a thin coating 14 of explosive. The process is illustrated in Figure 6. Explosive is dissolved in solvent, producing solution 40, to which is added inert material in the form of beads, fibers, or other substrates, producing explosive coated substrates 42 in solvent, from which the solvent is removed, leaving explosive simulant 44 of a minor amount of explosive coated on substrates.

By way of example, the method may be carried out by the following sequence of operational steps:
1. Selecting inert beads constructed of cyanuric acid having a diameter of approximately 5-1000µm; and
2. Coating the beads with a layer, having a thickness of approximately 1-10µm, of TNT molecules by the following procedure:
   a. dissolving TNT molecules in acetone solvent to form a lacquer,
   b. mixing the cyanuric acid beads with the lacquer to coat the beads with lacquer,
   c. heating the mixture to 55°C while stirring in a vertical high shear mixer at medium speed while pulling a vacuum to remove the solvent.

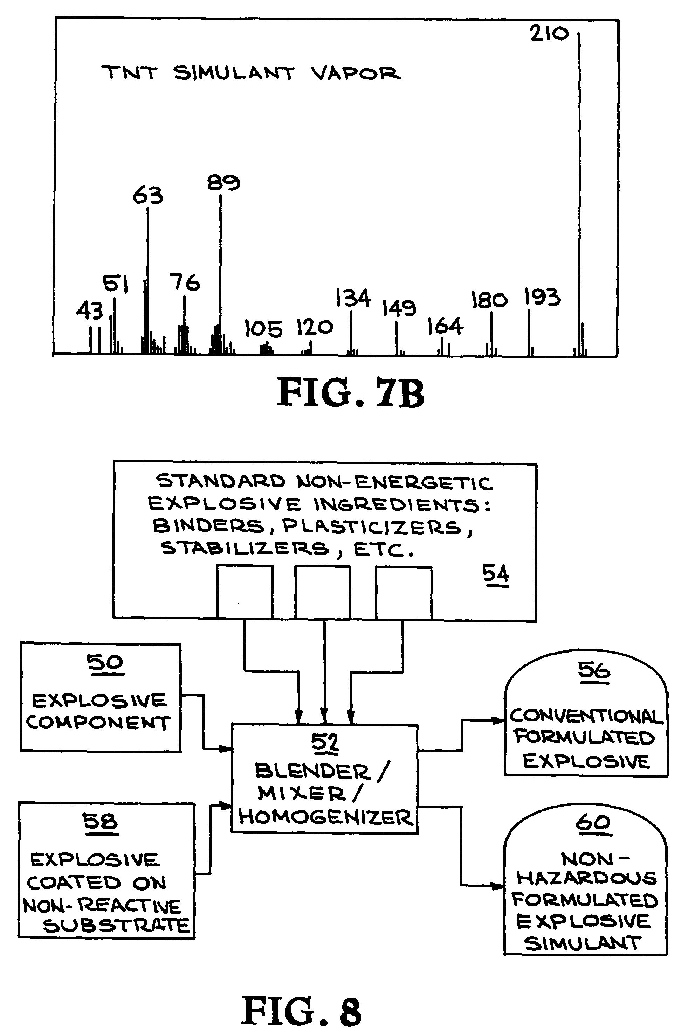

The chemical characteristics of the explosive and the simulant are the same. Figures 7A, B show the mass spectra of vapors of TNT and TNT simulant, respectively, which are identical.

The invention can be used to make formulated explosive simulants, e.g. plastic explosive simulants, as shown in Figure 8. Plastic explosive 56 is formed by mixing explosive 50 in plastic or plastic/oil and other materials 54 in mixing apparatus 52. Plastic explosive simulant 60 is produced by treating explosive simulant 58, as described above, in mixing apparatus 52 in the same way as explosive 50 is treated, i.e. the simulant is substituted for the explosive in the formulation process.

Thus, the invention provides a non-detonable explosive and non-explosive simulator. Testing has shown the explosive simulant formulations are insensitive to impact, spark, friction, temperature, and shock. These explosive simulants have been scaled to 1.5 kg quantities for use in field evaluation by explosives detecting canines. Thus, the training hazards posed by the use of actual explosives and the increased costs due to training, shipping, storage, and security requirements may be substantially reduced by utilizing the explosive simulants. In addition, by use of explosive simulants, training can be carried out in critical areas previously forbidden. Thus, the present invention substantially advances the field of explosive detection training, be it by canines or sensitive instruments. Likewise, other applications where explosives simulation is required may be met by this invention.

## Claims

1. A non-detonable and non-explodable explosive simulant comprising:
a quantity of an explosive material; and
a quantity of a non-explosive material;
said materials being combined in proportions such that the mixture is chemically equivalent to said explosive material, but is not detonable or explodable;
wherein said explosive material is selected from TNT, RDX, HMX, PETN, TATB, NTO, nitroguadanine, urea nitrate, ammonium nitrate, ammonium perchlorate, nitrate esters, ammonium picrate, lead azide, lead styphnate, fulminates, or nitrocellulose, and wherein said non-explosive material is selected from cyanuric acid, melamine, sand or glass.

2. An explosive simulant as claimed in claim 1, characterised in that said explosive material is TNT, and in that said non-explosive material is cyanuric acid.

3. An explosive simulant as claimed in claim 2, characterised in that said TNT and cyanuric acid have a respective percentage by weight of TNT in the range of 5% to 20% and a percentage by weight of cyanuric acid in the range of 95% to 80%.

4. An explosive simulant as claimed in claim 1, 2 or 3, characterised in that said non-explosive material is in the form of a substrate, and in that said explosive material is in the form of a coating on the substrate.

5. An explosive simulant as claimed in claim 4, characterised in that said substrate is beads or fibers having a diameter of 5-1000µm, and wherein said coating has a thickness in the range of 1 to 10µm.

6. An explosive simulant as claimed in claim 1, 2 or 3, characterised in that said non-explosive material is in the form of a matrix and said explosive material is distributed in the matrix.

7. A method for fabricating a non-detonable and non-explodable explosive simulant, comprising the steps of:
dissolving a quantity of an explosive material in a solvent;
adding a quantity of non-explosive material to the thus formed solution;
mixing the solution; and
removing the solvent from the solution;
additionally including the steps of providing a quantity of TNT as the explosive material, and providing a quantity of cyanuric acid as the non-explosive material in a weight percentage of 5-20 percent TNT and 80-95 percent cyanuric acid; and providing acetone as the solvent in which the TNT is dissolved.

8. A method as claimed in claim 7, characterised in that the step of removing the solvent is carried out by the steps of vacuum air sweeping the solution and heating the solution to a specified temperature while vigorously mixing the solution.

9. A method as claimed in claim 8, characterised in that the step of removing the solvent includes the steps of vacuum air sweeping and heating to 50°C.

10. A method as claimed in claim 9, characterised in that the step of mixing is carried out in a vertical high shear mixer at a medium speed.

11. A method for forming a non-detonable and non-explodable explosive simulant, comprising the steps of:
providing a substrate of a non-explosive material; and
coating the substrate with a layer of explosive material;
wherein the substrate is formed from inert material selected from cyanuric acid, melamine, sand or glass; and
the coating is formed from material selected from TNT, RDX, HMX, PETN, TATB, NTO, nitroguadanine, urea nitrate, ammonium nitrate, ammonium perchlorate, nitrate esters, ammonium picrate, lead azide, lead styphnate, fulminates, or nitrocellulose.

12. A method as claimed in claim 11, characterised in that the substrate is in the form of beads, fibers or foams.

13. A method as claimed in claim 12, characterised in that the substrate is formed of beads or fibers having a diameter of 5-1000µm and the explosive coating has a thickness of 1-10 µm.

14. A method as claimed in claim 11, 12 or 13, characterised in that the coated substrate has a sufficiently large ratio of explosive material surface area to non-explosive material volume that the simulant is not detonable and not explodable.

## Patentansprüche

1. Ein nicht detonierbarer und nicht explosiver Sprengstoffsimulator mit:
- einem Anteil eines explosiven Materiales und
- einem Anteil eines nicht explosiven Materiales,
- wobei diese Materialien in solchen Anteilen miteinander vermengt werden, so daß die Mischung chemisch äquivalent zu dem Sprengstoff, jedoch weder detonierbar noch explosiv ist,
- wobei das explosive Material ausgewählt ist aus TNT, RDX, HMX, PETN, TATB, NTO, Nitroguadanin, Harnstoffnitrat, Ammoniumnitrat, Ammoniumperchlorat, Nitratestern, Ammoniumpikrat, Bleiazid, Bleistyphnat, Fulminaten oder Nitrocellulose und wobei die nicht explosiven Materialien ausgewählt sind aus Cyanursäure, Melamin, Sand oder Glas.

2. Sprengstoffsimulator nach Anspruch 1, **dadurch gekennzeichnet**, daß das explosive Material TNT und das nicht explosive Material Cyanursäure ist.

3. Sprengstoffsimulator nach Anspruch 2, **dadurch gekennzeichnet,** daß das TNT und die Cyanursäure Gewichtsprozentanteile aufweisen, die im Bereich von 5 bis 20 Gew.-% TNT und 95 bis 80 Gew.- % Cyanursäure liegen.

4. Sprengstoffsimulator nach Anspruch 1, 2 oder 3, **dadurch gekennzeichnet**, daß das nicht explosive Material in Form eines Substrates und das explosive Material in Form einer Beschichtung des Substrates vorliegen.

5. Sprengstoffsimulator nach Anspruch 4, **dadurch gekennzeichnet**, daß das Substrat Kügelchen oder Faserstoffe mit einem Durchmesser von 5 bis 1.000 µm und daß die Beschichtung eine Dicke im Bereich zwischen 1 und 10 µm liegend aufweist.

6. Sprengstoffsimulator nach Anspruch 1, 2 oder 3, **dadurch gekennzeichnet,** daß das nicht explosive Material in Form einer Matrix und das explosive Material in der Matrix verteilt vorliegt.

7. Verfahren zum Herstellen eines nicht detonierbaren und nicht explosiven Sprengstoffsimulators mit folgenden Schritten:
- Auflösen einer Menge eines explosiven Materials in einem Lösungsmittel,
- Hinzufügen einer Menge eines nicht explosiven Materials zu der auf diese Weise gebildeten Lösung,
- Vermengen der Lösung und
- Entfernen des Lösungsmittel von der Lösung, beinhaltend die Schritte des Bereitstellens einer TNT-Menge als explosives Material, einer Cyanursäuremenge als nicht explosives Material in Gewichtsprozenten von 5 bis 20 Gew.-% TNT und 80 bis 95 Gew.-% Cyanursäure sowie von Azeton als Lösungsmittel, in dem das TNT gelöst wird.

8. Verfahren nach Anspruch 7, **dadurch gekennzeichnet**, daß der Schritt des Entfernens des Lösungsmittels durch die Schritte des Anlegens eines Vakuumluftstroms und eines Erwärmens der Lösung auf eine vorbestimmte Temperatur bei gleichzeitigem heftigen Vermischung der Lösung erfolgt.

9. Verfahren nach Anspruch 8, **dadurch gekennzeichnet**, daß der Schritt des Entfernens des Lösungsmittels die Schritte des Anlegens eines Vakuumluftstroms und ein Erwärmen auf 50°C beinhaltet.

10. Verfahren nach Anspruch 9, **dadurch gekennzeichnet**, daß der Schritt des Vermischens in einem vertikalen Schermischer bei mittlerer Geschwindigkeit durchgeführt wird.

11. Verfahren zum Bilden eines nicht detonierbaren und nicht explosiven Sprengstoffsimulators mit folgenden Schritten:
- Bereitstellen eines Substrates eines nicht explosiven Materiales und
- Beschichten des Substrates mit einer Schicht eines explosiven Materiales,
- wobei das Substrat aus einem inerten Material gebildet und ausgewählt aus Cyanursäure, Melamin, Sand oder Glas ist und
- die Beschichtung aus einem Material gebildet und ausgewählt ist aus TNT, RDX, HMX, PETN, TATB, NTO, Nitroguadanin, Harnstoffnitrat, Ammoniumnitrat, Ammoniumperchlorat, Nitratestern, Ammoniumpikrat, Bleiazid, Bleistyphnat, Fulminaten oder Nitrocellulose erfolgt.

12. Verfahren nach Anspruch 11, **dadurch gekennzeichnet**, daß das Substrat in Form von Kügelchen, Fasern oder Schäumen vorliegt.

13. Verfahren nach Anspruch 12, **dadurch gekennzeichnet**, daß das Substrat aus Kügelchen oder Faserstoffen mit einem Durchmesser von 5 bis 1.000 µm und die Sprengstoffbeschichtung eine Dicke von 1 bis 10 µm aufweist.

14. Verfahren nach einem der Ansprüche 11, 12 oder 13, **dadurch gekennzeichnet**, daß das beschichtete Substrat ein ausreichend großes Verhältnis zwischen Sprengstoffmaterialoberfläche zu nicht explosivem Materialvolumen aufweist, so daß der Simulator weder detonierbar und noch explosiv ist.

## Revendications

1. Un simulateur d'explosif non détonant et non explosif, comprenant :
une certaine quantité d'un explosif ; et
une certaine quantité d'un matériau non explosif ;
lesdits matériaux étant combinés en proportions telles que le mélange soit chimiquement équivalent audit matériau explosif, mais ne soit ni détonant ni explosif ;
dans lequel ledit matériau explosif est choisi parmi le TNT, le RDX, le HMX, le PETN, le TATB, le NTO, la nitroguadanine, le nitrate d'urée, le nitrate d'ammonium, le perchlorate d'ammonium, les esters nitriques, le picrate d'ammonium, l'azidure de plomb, le styphnate de plomb, les fulminates, ou la nitrocellulose, et dans lequel ledit matériau non explosif est choisi parmi l'acide cyanurique, la mélamine, le sable et le verre.

2. Un simulateur d'explosif selon la revendication 1, caractérisé en ce que ledit matériau explosif est le TNT, et en ce que ledit matériau non explosif est l'acide cyanurique.

3. Un simulateur d'explosif selon la revendication 2, caractérisé en ce que lesdits TNT et acide cyanurique sont respectivement en un pourcentage en poids de TNT de 5 à 20 % et un pourcentage en poids d'acide cyanurique de 95 à 80 %.

4. Un simulateur d'explosif selon la revendication 1, 2 ou 3, caractérisé en ce que ledit matériau non explosif est sous la forme d'un substrat, et en ce que ledit matériau explosif est sous la forme d'un revêtement sur le substrat.

5. Un simulateur d'explosif selon la revendication 4, caractérisé en ce que ledit substrat est constitué de perles ou de fibres ayant un diamètre de 5 à 1000 µm, et ledit revêtement a une épaisseur allant de 1 à 10 µm.

6. Un simulateur d'explosif selon la revendication 1, 2 ou 3, caractérisé en ce que ledit matériau non explosif est sous la forme d'une matrice et ledit matériau explosif est réparti dans la matrice.

7. Un procédé de fabrication d'un simulateur d'explosif non détonant et non explosif, comprenant les étapes consistant à :
dissoudre une certaine quantité d'un matériau explosif dans un solvant ;
ajouter une certaine quantité de matériau non explosif à la solution ainsi formée ;
mélanger la solution ; et
éliminer le solvant de la solution ;
et comprenant en outre les étapes consistant à prendre une certaine quantité de TNT en tant que produit explosif, et à prendre une certaine quantité d'acide cyanurique en tant que matériau non explosif, selon un pourcentage en poids de 5 à 20 % de TNT et de 80 à 95 % d'acide cyanurique ; et à prendre de l'acétone en tant que solvant dans lequel est dissous le TNT.

8. Un procédé selon la revendication 7, caractérisé en ce que l'étape d'élimination du solvant est effectuée au moyen d'opérations de balayage de la solution à l'air sous vide et de chauffage de la solution à une température spécifiée tout en malaxant vigoureusement la solution.

9. Un procédé selon la revendication 8, caractérisé en ce que l'étape d'élimination du solvant comprend les opérations de balayage à l'air sous vide et de chauffage à 50°C.

10. Un procédé selon la revendication 9, caractérisé en ce que l'étape de malaxage est effectuée dans un mélangeur à vitesse de cisaillement élevée vertical à une vitesse moyenne.

11. Un procédé de formation d'un simulateur d'explosif non détonant et non explosif, comprenant les étapes consistant à :
Prendre un substrat en un matériau non explosif ; et
revêtir le substrat d'une couche de produit explosif;
dans lequel le substrat est formé d'une matière inerte choisie parmi l'acide cyanurique, la mélamine, le sable et le verre ; et
le revêtement est formé d'un matériau choisi parmi le TNT, le RDX , le HMX, le PETN, le TATB, le NTO, la nitroguadanine, le nitrate d'urée, le nitrate d'ammonium, le perchlorate d'ammonium, les esters nitriques, le picrate d'ammonium, l'azidure de plomb, le styphnate de plomb, les fulminates, et la nitrocellulose.

12. Un procédé selon la revendication 11, caractérisé en ce que le substrat est sous la forme de perles, de fibres ou de mousses.

13. Un procédé selon la revendication 12, caractérisé en ce que le substrat est formé de perles ou de fibres ayant un diamètre de 5 à 1000 µm et le revêtement explosif a une épaisseur de 1 à 10 µm.

14. Un procédé selon la revendication 11, 12 ou 13, caractérisé en ce que le substrat revêtu a un rapport de la surface spécifique du matériau explosif au volume du matériau non explosif suffisamment grand pour que le simulateur ne soit ni détonant ni explosif.
